# EUROPEAN PATENT APPLICATION

(11) **EP 1 383 059 A1**
(43) Date of publication of application: **21.01.2004**
(21) Application number: 02445100.7
(22) Date of filing: 18.07.2002
(51) Int. Cl.: G06F 17/60, G06F 17/20

(54) **A system for creating an individual model for simulating and evaluating advantages with a product**

(71) Applicant: Logical Tree AB, 115 41 Stockholm (SE)
(72) Inventor: Jacobi, Lars, 113 35 Stockholm (SE)
(74) Representative: Johansson Webjörn, Ingmari

(57) **Abstract**

The present invention relates to a system (10) for creating an individual model for simulating and evaluating advantages, disadvantages, direct costs and indirect costs for a product, wherein the model is structured as a logical tree structure. The system (10) comprises a building means (12) operable to start building a tree structure with at least one box. The system (10) also comprises a to said building means (12) connected cloning means (14) operable to clone said at least on box and/or tree structure to create a tree structure comprising further boxes. The system (10) also comprises a to said cloning means (14) connected arithmetic means (16) operable to create an arithmetic rule between different boxes in said tree structure. The system (10) also comprises an input means (18) operable to make it possible for a user of said system (10) to input start figures which function as a base for said logical tree structure. The system (10) also comprises a to said building means (12), said cloning means (14), said arithmetic means (16), and said input means (20) operable to, based on said created tree structure, said arithmetic rules and said input figures, create said individual model in the form of said logical tree structure including said tree structure provided with figures and/or text.

## Description

### Technical field of the invention

The present invention relates in a first aspect to a system for creating an individual model for simulating and evaluating advantages, disadvantages, direct costs and indirect costs for a product.

In a second aspect the present invention relates to a method for creating an individual model for simulating and evaluating advantages, disadvantages, direct costs and indirect costs for a product.

In a third aspect the present invention relates to at least one computer program product for creating an individual model for simulating and evaluating advantages, disadvantages, direct costs and indirect costs for a product.

In a fourth aspect the present invention relates to a use of a system for evaluating advantages, disadvantages, direct costs and indirect costs for a product/solution.

It should be emphasised that the term "product" as it is used in the specification and claims refers to all kinds of products, such as tangible products, computer program products, services, or solutions to a problem.

### Description of related art

One known problem in this technical field is the difficulty of structuring, accounting and conveying complex business arguments. It is often very difficult to evaluate the value of investments in technically advanced products.
The article "A Dynamic Modelling Toolkit to Add Rigor to Business Process Re-engineering", IEEE Proceedings of the twenty-seventh Annual Hawaii International Conference on System Sciences, 1994, p. 683- 692, by J. R. Warren et al, describes a modelling toolkit which uses a tree structure to analyse and optimise a process. This solution uses the tree structure to present hierarchical relations.

This solution make use of the "black box" principle which makes it difficult to evaluate an investment.

The document EP-A2-0 841 612 relates to a framework which is being used for developing software systems, e.g. for a business application. This framework includes a number of object oriented classes which may be processed by a computer system. A tree structure is used in this solution for describing the scheme of an organisation.

The framework described in the document EP-A2-0 841 612 does not include a method description of how technically complex products are evaluated through a tree structure. Nor does it include a method description of how several alternative decision scenarios are evaluated through a tree structure.

None of these above presented solutions gives an effective way or model of simulating and evaluating advantages with a product.

### Summary of the invention

The above mentioned problems are solved with a system for creating an individual model for simulating and evaluating advantages with a product according to the present invention. The model is structured as a logical tree structure. the system comprises a building means operable to start building a tree structure with at least one box. The system also comprises a to said building means connected cloning means operable to clone said at least one box and/or tree structure to create a tree structure comprising further boxes. The system also comprises a to said cloning means connected arithmetic means operable to create an arithmetic rule between different boxes in said tree structure. The system also comprises an input means operable to make it possible for a user of said system to input figures which functions as a base for said logical tree structure. The system also comprises a to said building means, said arithmetic means and said input means connected control means operable to, based on said created tree structure, said arithmetic rules and said input figures, create said individual model in the form of said logical tree structure including said tree structure provided with figures and/or text. A main advantage with this solution is that it facilitates the structure of arguments and consequently makes it easier to structure and convey the logic of arguments containing a combination of facts and figures. This model makes it easier to understand and evaluate the advantages with e.g. a product/solution. This solution also reduces the time consumption of structuring complex business arguments. The result of these advantages can be summarized as simplifying the decision making process of an investment.

In this connection it is a further advantage that said control means calculates the figures presented in said boxes in said logical tree structure based on said arithmetic rules and said input figures.

A further advantage in this connection is that said system also comprises a to said control means connected display means operable to display said logical tree structure including boxes with figures and/or text.

In this connection it is a further advantage that said input means has selection means operable to select one of different displaying modes.

A further advantage in this connection is that said different displaying modes can e.g. be in the form of a benefit tree where all the benefits are displayed in said logical tree structure, a cost tree where all the costs are displayed in said logical tree structure, a sum tree where all results are displayed in said logical tree structure, and periodical trees where the figure-changes over time are displayed in different logical tree structures.

In this connection it is a further advantage that said system also comprises a to said control means connected memory means operable to store said logical tree structure, said input figures, and said arithmetic rules.

A further advantage in this connection is that said boxes in said logical tree structure which are linked together are displayed with a visible link between said boxes.

In this connection it is a further advantage that said arithmetic rule can e.g. be in the form of addition, subtraction, multiplication, division and/or an IF-function.

Another object of the invention is to provide a method for creating an individual model for simulating and evaluating advantages with a product, wherein the model is structured as a logical tree structure. The method comprises the steps:
- to start building a tree structure with at least one box;
- to clone said at lest one box and/or tree structure to create a tree structure comprising further boxes;
- to input start figures and/or text which function as a base for said logical tree structure;
- to create an arithmetic rule between different boxes in said tree structure;
- based on said created tree structure, said arithmetic rules and said input start figures to calculate new figures to present in said boxes; and
- to create and display said individual model in the form of said logical tree structure including said tree structure provided with the new figures and/or text.

A main advantage with this solution is that it facilitates the structure of arguments and consequently makes it easier to structure and convey the logic of arguments containing a combination of facts and figures. This method makes it easier to see the advantages with e.g. a product. This solutions also reduces the time consumption.

In this connection it is a further advantage that said method also comprises the step:
- to select on of different displaying modes for displaying said logical tree structure including boxes with figures and/or text.

A further advantage in this connection is that said different displaying modes can e.g. be in the form of a benefit tree where all the benefit evaluation components logically are displayed in said logical tree structure, a cost tree where all the costs are displayed in said logical tree structure, a sum tree where all investment results are displayed in said logical tree structure, and periodical trees where any figure-changes over a specific time period are displayed in different logical tree structures.

A further advantage in this connection is that said different periodical trees are displayed in different logical tree structures separated from each other.

In this connection it is a further advantage that said method also comprises the steps:
- to select a background colour;
- to select a colour of said logical tree structure; and/or
- to select a colour of an individual box.

A further advantage in this connection is that said method also comprises the step:
- to delete a box in said logical tree structure; and
- to move a box in said logical tree structure; and
- to remove a box in said logical tree structure.

Another object of the invention is to provide at least one computer program product directly loadable into the internal memory of at lest one digital computer. The at least one computer program product comprises software code portions for performing the steps of the method according to the present invention, when said at least one product is/are run on said at least one computer.

Another object of the invention is the use of a system according to the present invention for evaluating advantages with a product/solution. The use comprises the steps:
- to identify at least one characteristic with the product/solution and input said characteristic(s) with an input means comprised in said system;
- to identify a measurable unit which can be used to measure said characteristic(s) of the product/solution and input said unit with said input means;
- to identify the first number of units of the current situation and input said first number of units with said input means;
- to identify the second number of units of the situation after the product/solution has been implemented and input said second number of units with said input means;'
- to identify how much each unit is worth in money and input this amount with said input means and
- to perform at least one step of the method according to the present invention, whereby it is possible to evaluate said product/solution.

It should be emphasised that the term "comprises/comprising" when used in this specification is taken to specify the presence of stated features, steps or components but does not preclude the presence of one or more other features, integers, steps, components or groups thereof.

Embodiments of the invention will now be described with a reference to the accompanying drawings, in which:

### Brief description of the drawings

- Figure 1: shows a block diagram of a system for creating an individual model for simulating and evaluating advantages with a product according to the present invention;
- Figure 2: is a flow chart of a method for creating an individual model for simulating and evaluating advantages with a product according to the present invention;
- Figure 3: is a flow chart of a use of a system for evaluating advantages with a product/solution according to the present invention;
- Figure 4: shows a schematic view of the start position when creating a logical tree structure;
- Figure 5: shows a schematic view of the next step when creating the logical tree structure;
- Figure 6: shows a schematic view of building a further level when creating the logical tree structure;
- Figure 7: shows a schematic view of a "complete" logical tree structure; and
- Figure 8: shows a schematic diagram of some computer program products according to the present invention.

### Detailed description of embodiments

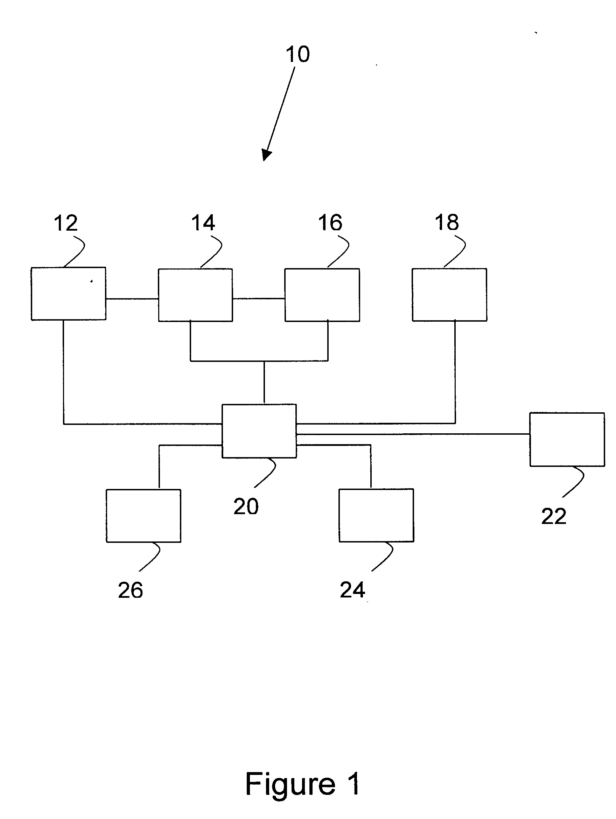

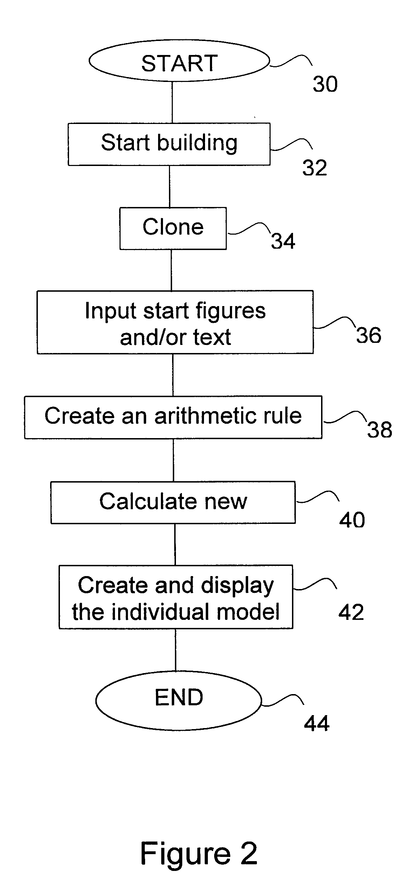

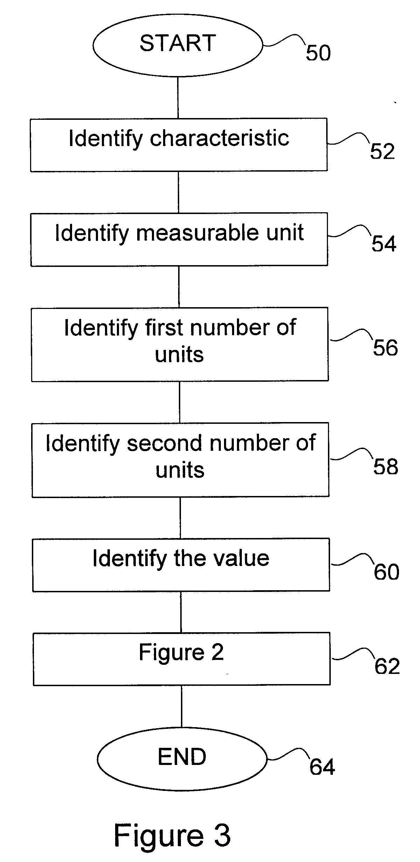

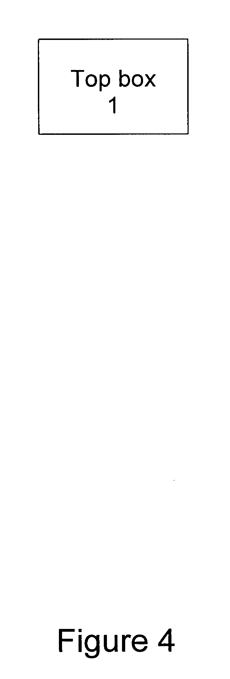

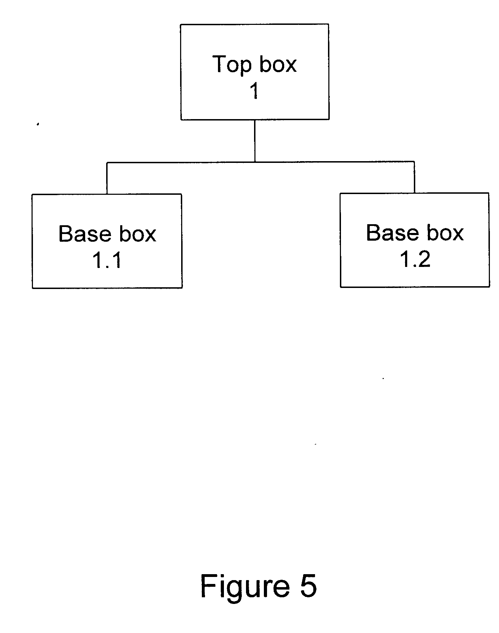

In figure 1 there is disclosed a block diagram of a system 10 for creating an individual model for simulating and evaluating advantages disadvantages, direct costs and indirect costs for a product according to the present invention. The system 10 comprises a building means 12 operable to start building a tree structure with at least one box. (See figure 4.) A cloning means 14 is connected to the building means 12, which cloning means 14 is operable to clone said at least one box and/or a tree structure to create a tree structure comprising further boxes. (See figure 5.) The system 10 also comprises a to said cloning means 14 connected arithmetic means 16 operable to create an arithmetic rule between two different boxes. The arithmetic rule can e.g. be in the form of and addition, a subtraction, a multiplication, a division and/or an IF-function. The system 10 also comprises an input means 18 operable to make it possible for a user of the system 10 to input start figures which function as a base for said logical tree structure. The system 10 also comprises a control means 20 connected to the building means 12, the cloning means 14, the arithmetic means 16 and the input means 18.The control means 20 is operable to, based on said arithmetic rules and said input start figures, create said individual model in the form of said logical tree structure including said tree structure provided with figures and/or text. As is apparent from figure 1 the system 10 also comprises a to said control means 20 connected display means 22 operable to display said logical tree structure including boxes with figures and/or text. Said system 10 also comprises a to said control means 20 connected selection means 24 operable to select one of different displaying modes. Finally the system 10 also comprise a to said control means 20 connected memory means 26 operable to store the logical tree structure, the input start figures, the input figures and the arithmetic rules. The function of the system 10 disclosed in figure 1 will be explained in connection with the description of figure 2 and figure 3.

In figure 2 there is disclosed a flow chart of a method for creating an individual model for simulating and evaluating advantages with a product according to the present invention. The method begins at block 30. The method then continues, at block 32 with the step: to start building a tree structure with at least one box. Thereafter, the method continues, at block 34, by performing the step: to clone said at least one box and/or tree structure to create a tree structure comprising further boxes. The method continues, at block 36, with the step: to input start figures and/or text which function as a base for said logical tree structure. At block 38 the method continues by performing the step: to create an arithmetic rule between different boxes in said tree structure. The method continues, at block 40, with the step: based on said created tree structure, said arithmetic rules and said input start figures to calculate new figures to present in said boxes. At block 42 the method continues by performing the step: to create and display the individual model in the form of said logical tree structure including said tree structure, provided with the new figures and/or text. The method is completed at block 44.

In figure 3 there is disclosed a flow chart of a use of a system, e.g. the system 10 disclosed in figure 1, for evaluating advantages with a product/solution according to the present invention. The use begins at block 50. The use then continues, at block 52 with the step; to identify at least one characteristic with the product/solution and input said characteristic(s) with an input means 18 comprised in said system 10. Thereafter, the use continues, at block 54, by performing the step; to identify a measurable unit which can be used to measure said characteristic(s) of the product/solution and input said unit with said input means 18. The use continues, at block 56, with the step: to identify the first number of units of the current situation and input said first number of units with said input means 18. At block 58 the use continues by performing the step: to identify the second number of units of the situation after the product/solution has been implemented and input said second number of units with said input means 18. The use continues, at block 60, with the step: to identify how much each unit is worth in money and input this amount with said input means 18. At block 62, the use continues by performing the step: to perform at least one step of the method according to claim 9, and which is disclosed in figure 2, whereby it is possible to evaluate said product/solution. The use is completed at block 64.

In figure 4 there is disclosed a schematic view of the start position, after the first step, when creating a logical tree structure. In this simple example the start position only includes one box, a top box labelled 1.

In figure 5 there is disclosed a schematic view of the next step when creating the logical tree structure. In this figure the top box 1 has been cloned into 2 new boxes downward, namely the base boxes 1.1 and 1.2. The visible link between the boxes has also been added.

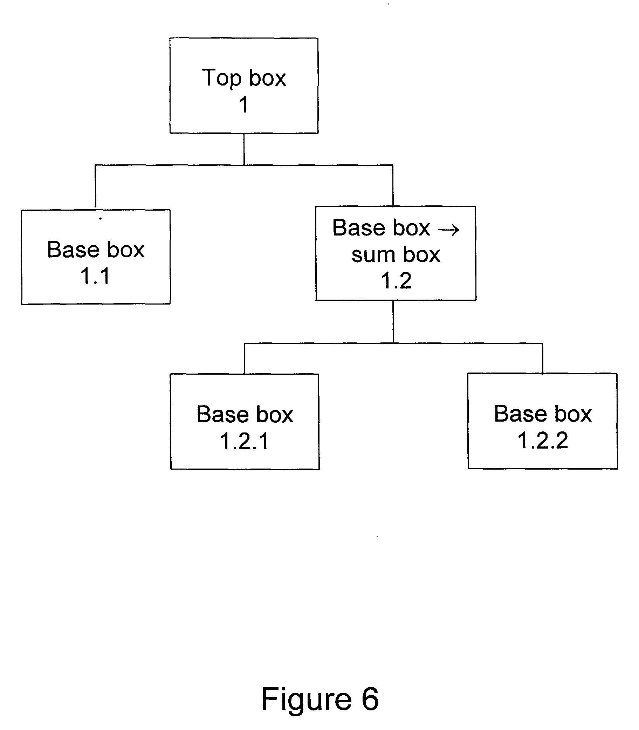

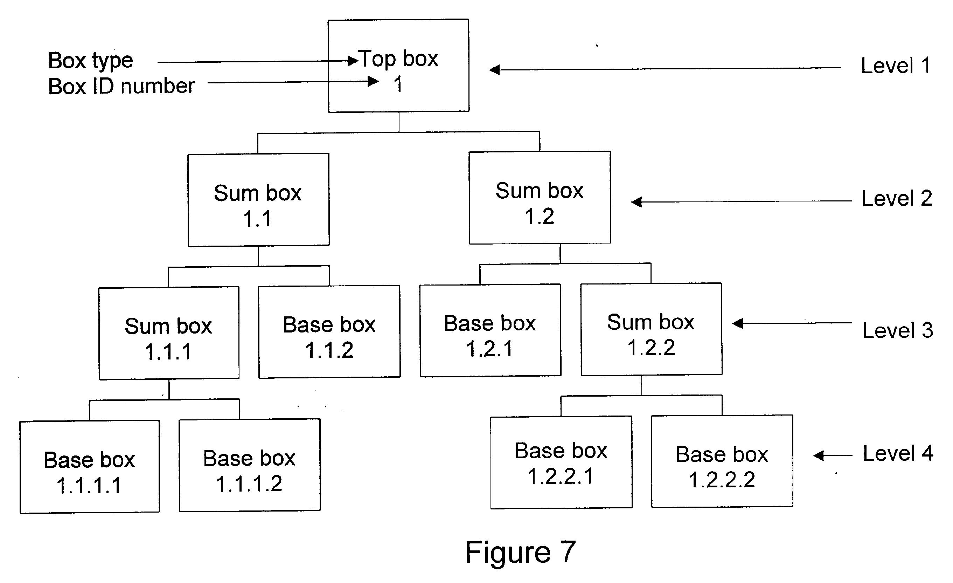

In figure 6 there is disclosed a schematic view of building a further level when creating the logical tree structure. In this example the base box 1.2 has been cloned into two new boxes, creating the base boxes 1.2.1 and 1.2.2. This means that the base box 1.2 becomes the sum box 1.2. The new visible link between the new boxes has also been added. In figure 7 there is disclosed a schematic view of a logical tee structure with four levels. At level 1 there is only one top box 1. At level 2 there are two different sum boxes 1.1 and 1.2. At level 3 there are four different boxes, two sum boxes 1.1.1 and 1.2.2 and two base boxes 1.1.2 and 1.2.1. At the last level in this particular example, namely level 4, there are four different base boxes, 1.1.1.1, 1.1.1.2, 1.2.2.1 and 1.2.2.2.

It should also be mentioned that the invention can facilitate comparisons between two or more investment alternatives by means of comparing either the same product/solution with different input figures or by comparing two different products/solutions with different tree structures. The results of the comparison is displayed both in graph format and in a table format where the results of each period can be compared. It is possible to insert new figures in each scenario and to do a new comparison.

The invention achieves a lots of advantages, a some of which are listed below:
1) The invention supports evaluation of an investment
2) The invention supports the evaluation of an investment not by using the "black box" principle but instead a "transparent box" principle. The tree structure is used as a display instrument. This facilitates structuring of arguments and evidence. Thereby displaying exactly how an investment evaluation model has been constructed (thus the term transparent box) AND logically displaying the actual figures throughout the entire evaluation structure, rather than simply displaying a hierarchical structure of process facts.
3) The invention supports the evaluation of several scenarios as compared to simply comparing "before and after" implementation of a process.
4) The invention also differs out of a money-flow perspective since additional to evaluating any cost reducing investment benefits, revenue increasing investment benefits are included as well.

### Definitions

- Platform:: A platform is a working environment for the builder where a set of functions is available. On this platform the builder then builds a tree structure. The tree structure will consist of boxes (the boxes can be seen as leaves in the tree structure). The boxes contain facts and figures. So, basically the platform enables easier structuring of facts and figures.
- Tree:: A tree contains a number of boxes.
- Benefit tree:: A benefit tree is a tree where all the benefits are displayed.
- Cost tree:: A cost tree is a tree where all the costs are displayed.
- Sum tree:: A sum tree is a tree where all the results are displayed.
- Periodical tree:: A periodical tree is a tree where the figure-changes over time are displayed. The more changes over a time-span of a case, the more periodical trees.
- Box:: A limited area, which contains figures and facts explaining the figures. The box is connected with a branch through an arithmetic relationship of some kind. The arithmetic relationship will be explained in more detail below. There are three types of boxes:
- Top box:: The original box of the tree from which the other boxes are cloned. The top box is situated highest up in the tree.
- Sum box:: A box containing a summarised value from boxes below. The sum boxes are always situated in between top boxes and base boxes.
- Base box:: Base boxes contain the base values added by the user. Another definition is input figure boxes. The base boxes are situated lowest down in the tree.
- Periodical:: A defined time span by the system. The periodical is needed since displaying figures in a tree is static, and figures entered by the builder may change over time. A typical periodical is one year. If the time span of the business case is five years there will then be five periodical trees of benefits and five periodical trees of costs. The periodicals are a part of the result section as well.

### The benefit tree

The benefit tree is where the final figure will be added (+).

The first set of branches will be divided into the same number of branches as the builder has set as periodicals of the case. Each branch will be a periodical period.

The second set of branches are then determined by the builder, and any sub branching from the third set of branches as well.

### The periodical trees

The periodical trees display the information in the trees over time.

For example: The period set for a case is two years and the parameters need to be changed every 6 months. Over the two year-period this means that the figures need to be changed four times, which means that there must be four periodical trees available for each benefit section and four periodical trees available for each cost section.

The periodical trees can be available though a menu.

The periodicals shall be able to display in two views, parallel and layered views. The parallel view will show all the periodicals separated from each other in the horizontal plane. The layered view will show all the periodicals laying on top of each other year by year or month by month or whatever the user has chosen. The view will be a three-dimensional view where all the periodicals can be seen lying on top of each other.

### The sum trees

The sum trees summarise the results of the data in the previous trees. Therefore all top boxes in all previous trees (benefit tree + all periodical benefit trees AND cost trees + all periodical cost trees) are linked and displayed in this section as well.

There will be two sum trees to analyse the results of the data:
- periodical analysis
- benefits vs. cost analysis.

Periodical analysis: The first tree will consist of X number of branches summarising the periodical results. Each annual ring result branch include two branches: benefit tree figure (+) for that periodical and cost tree figure (-) for that periodical.

Benefits vs. cost analysis: The second tree will consist of two branches: benefit branch including the value from all of the benefits over the whole time period (all periodicals) respective cost branch including costs form the whole time period (all periodicals).

### The text function

The text function enables the builder to add text to each box in order to explain the value in the box.

The function is executed by double clicking on a "text empty" box and selecting "adding text" in the menu. The text is automatically copied into the Input section.

### The arithmetic function

Previously it is described that there exists an arithmetic relation between the boxes. This arithmetic relation is one of the following four examples: addition, subtraction, multiplication, division or IF statement.

The arithmetic function enables the builder to decide the arithmetic rule between added input figures.

The builder makes the decision of what arithmetic rule should exist between two figures in two separate boxes. The arithmetic function is executed by double clicking on a "text empty" box and by selecting "adding arithmetic rule" in the menu.

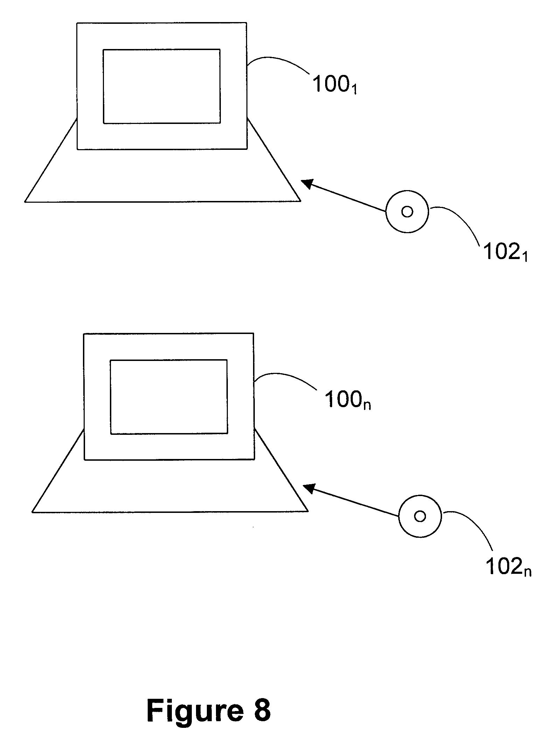

In figure 8 there is disclosed a schematic diagram of some computer program products according to the present invention. There is disclosed n different digital computers 100₁,..., 100ₙ, wherein n is an integer. There is also disclosed n different computer program products 102₁,..., 102ₙ, here showed in the form of compact discs. The different computer program products 102₁, ..., 102ₙ are directly loadable into the internal memory of the different digital computers 100₁, ..., 100ₙ. Each computer program product 102₁,..., 102ₙ comprises software code portions for performing some or all the steps of figure 2 when the product(s) 102₁ ..., 102ₙ is/are run on said computer(s) 100₁ ..., 100ₙ. Said computer program products 102₁,..., 102ₙ can e. g. be in the form of floppy disks, RAM disks, magnetic tapes, opto magnetical disks or any other suitable products.

The invention is not limited to the embodiments described in the foregoing. It will be obvious that many different modifications are possible within the scope of the following claims.

## Claims

1. A system (10) for creating an individual model for simulating and evaluating advantages, disadvantages, direct costs and indirect costs for a product, wherein the model is structured as a logical tree structure, **characterized in that** said system (10) comprises a building means (12) operable to start building a tree structure with at least one box, a to said building means (12) connected cloning means (14) operable to clone said at least one box and/or tree structure to create a tree structure comprising further boxes, a to said cloning means (14) connected arithmetic means (16) operable to create an arithmetic rule between different boxes in said tree structure, an input means (18) operable to make it possible for a user of said system (10) to input start figures which function as a base for said logical tree structure, and a to said building means (12), said cloning means (14), arithmetic means (16), and said input means (18) connected control means (20) operable to, based on said created tree structure, said arithmetic rules and said input figures, create said individual model in the form of said logical tree structure including said tree structure provided with figures and/or text.

2. A system (10) according to Claim 1, **characterized in that** said control means (20) calculates the figures presented in said boxes in said logical tree structure based on said arithmetic rules and said input figures.

3. A system (10) according to any one of Claims 1 - 2, **characterized in that** said system (10) also comprises a to said control means (20) connected display means (22) operable to display said logical tee structure including boxes with figures and/or text.

4. A system (10) according to any one of Claims 1 - 3, **characterized in that** said input means (18) has selection means (24) operable to select one of different displaying modes.

5. A system (10) according to Claim 4, **characterized in that** said different displaying modes can e.g. be in the form of a benefit tree where all the benefits are displayed in said logical tree structure, a cost tree where all the costs are displayed in said logical tree structure, a sum tree where all results are displayed in said logical tree structure, and periodical trees where the figure-changes over time are displayed in different logical tree structures.

6. A system (10) according to any one of Claims 1 - 5, **characterized in that** said system (10) also comprises a to said control means (20) connected memory means (26) operable to store said logical tree structure, said input figures, and said arithmetic rules.

7. A system (10) according to any one of Claims 1 - 6, **characterized in that** said boxes in said logical tree structure which are linked together are displayed with a visible link between said boxes.

8. A system (10) according to any one of Claims 1 - 7, **characterized in that** said arithmetic rule can e.g. be in the form of addition, subtraction, multiplication, division and/or an IF-function.

9. A method for creating an individual model for simulating and evaluating advantages, disadvantages, direct costs and indirect costs for a product, wherein the model is structured as a logical tree structure, which method comprises the steps:
- to start building a tree structure with at least one box;
- to clone said at least one box and/or tree structure to create a tree structure comprising further boxes;
- to input start figures and/or text which function as a base for said logical tree structure;
- to create an arithmetic rule between different boxes in said tree structure;
- based on said created tree structure, said arithmetic rules and said input start figures to calculate new figures to present in said boxes; and
- to create and display said individual model in the form of said logical tree structure including said tree structure provided with the new figures and/or text.

10. A method according to Claim 9, **characterized in that** said method also comprises the step:
- to select one of different displaying modes for displaying said logical tree structure including boxes with figures and/or text.

11. A method according to Claim 10, **characterized in that** said different displaying modes can e.g. be in the form of a benefit tree where all the benefit evaluation components logically are displayed in said logical tree structure, a cost tree where all the costs are displayed in said logical tree structure, a sum tree where all investment results are displayed in said logical tree structure, and periodical trees where any figure-changes over a specific time period are displayed in different logical tree structures.

12. A method according to Claim 11, **characterized in that** said different periodical trees are displayed in different logical tree structures separated from each other.

13. A method according to any one of Claims 9 - 12, **characterized in that** said method also comprises the steps:
- to select a background colour;
- to select a colour of said logical tree structure; and/or
- to select a colour of an individual box.

14. A method according to any one of Claims 9 -13, **characterized in that** said method also comprises the step:
- to delete a box in said logical tree structure; and
- to move a box in said logical tree structure; and
- to remove a box in said logical tree structure.

15. At least one computer program product (102₁, ..., 102ₙ) directly loadable into the internal memory of at least one digital computer (100₁, ..., 100ₙ), comprising software code portions for performing the steps of claim 9 when said at least one computer program product (102₁, ..., 102ₙ) is/are run on said at least one computer (100₁, ..., 100ₙ).

16. A use of a system (10) according to any one of Claims 1-8 for evaluating advantages, disadvantages, direct costs and indirect costs for a product/solution, **characterized in that** said use comprises the steps:
- to identify at least one characteristic with the product/solution and input said characteristic(s) with an input means (18) comprised in said system; (10)
- to identify a measurable unit which can be used to measure said characteristic(s) of the product/solution and input said unit with said input means (18);
- to identify the first number of units of the current situation and input said first number of units with said input means (18);
- to identify the second number of units of the situation after the product/solution has been implemented and input said second number of units with said input means (18);
- to identify how much each unit is worth in money and input this amount with said input means (18); and
- to perform at least one step of the method according to Claim 9, whereby it is possible to evaluate said product/solution.
